# EUROPEAN PATENT SPECIFICATION

(11) **EP 2 752 284 B1**
(45) Date of publication and mention of the grant of the patent: **23.12.2020**
(21) Application number: 12828401.5
(22) Date of filing: 31.08.2012
(51) Int. Cl.: B29C 43/36, B29C 33/10, B29C 43/02, B29C 43/32

(54) **METHOD FOR MANUFACTURING MOLDED ARTICLE**
HERSTELLUNGSVERFAHREN FÜR EINEN FORMARTIKEL
PROCÉDÉ DE FABRICATION D'UN ARTICLE MOULÉ

(30) Priority: 31.08.2011 JP 2011190206
(43) Date of publication of application: 09.07.2014
(73) Proprietor: Tokyo Metropolitan Industrial Technology Research Institute, Tokyo 135-0064 (JP); j 's, Inc., Tokyo 108-0014 (JP)
(72) Inventor: KINOSHITA, Toshio, Tokyo 135-0064 (JP); KAMIYA, Yoshimi, Tokyo 135-0064 (JP); MURAI, Madoka, Tokyo 135-0064 (JP); SHIMIZU, Kenichi, Tokyo 135-0064 (JP); ARAKAWA, Hiroshi, Tokyo 105-0004 (JP); NAKAYAMA, Tetsuya, Tokyo 105-0004 (JP)
(74) Representative: Arends, William Gerrit
(86) International application number: PCT/JP2012/072216
(87) International publication number: WO 2013/031970

(56) References cited:
- EP-A2- 0 376 262
- WO-A2-2010/117602
- FR-A1- 2 706 803
- GB-A- 1 226 980
- GB-A- 1 309 554
- JP-A- 2000 025 734
- JP-A- 2004 276 463
- JP-A- 2005 007 680
- JP-A- 2005 089 538
- JP-A- 2005 089 538
- JP-A- 2009 263 519
- JP-A- 2010 253 781

## Description

### Technical Field

The present invention relates to a method for manufacturing a molded article.

### Background Art

Molded products, in particular, tableware (e.g., plates, various types of bowls, and *sake* cups) are usually manufactured by introducing a base material for such tableware into a space between an upper mold and a lower mold and compression-molding the material with heated molds.

In recent years, petroleum-based synthetic materials suitable for compression molding processing, such as phenol resins, urea resins and polycarbonates, etc., have been used as base materials for ordinary mass-produced tableware. However, some of these materials are suspected of releasing components which are toxic to human bodies or causing the elution of endocrine-disrupting chemicals, and their use has become a social issue. Thus, it is still considered desirable to use lacquer (called "urushi" in Japanese), wood and other plant fiber materials, i.e., natural resources, as the base materials for tableware, etc. Developing processing technology that allows for the mass-production of articles having an almost equal appearance and quality to those of conventional lacquerware articles, even when using natural resources for a molding material, is considered as being effective for solving the social issue.

For molding materials obtained using only natural resources as raw materials, for example, Patent Document 1 describes a molding material and a molded article proposed by the present inventors, the molding material and molded article enabling mass-production thereof and being stable and manageable, even if only natural resources, such as lacquer and plant fibers, are used as raw materials without using any petroleum-derived chemical substances.

Patent Document 2 describes containers made by applying surface treatment with natural lacquer to the surface of a wooden base which is prepared by molding a mixture of wood powder and a polylactic acid-based resin.

Patent Document 3 relates to lacquerware having a wood powder-containing coating film layer, and describes a method wherein the color of a coloring lacquer coating film M1 of a first layer to be applied first to the surface of a basis and the color of a coloring lacquer coating film M2 of a second layer to be applied subsequently are allowed to be seen at the same time in a spotted pattern, so as to create a feeling of novel quality to the eyes and improve texture and temperature transfer characteristics.

Patent Document 4 describes biodegradable plastic which is constructed by mixing the main material produced by breaking a 100% natural material, such as plant fibers, into pieces with a binder made of a 100% natural material, such as lacquer, through water, and drying and solidifying the mixture into a predetermined form.

### Prior Art References

### Patent Documents

Patent Document 1: JP3779290 B
Patent Document 2: JP2004-276463 A
Patent Document 3: JP2005-007680 A
Patent Document 4: JP2005-023262 A
Patent Document 5: GB1226980 discloses the pressing of workpieces from materials in a finely divided state.
WO2010117602A2 discloses the use of a mold consisting of several sections with a degassing operation, as per the preamble of claim 1.

### Summary of the Invention

### Problem to be Solved by the Invention

As already described above, currently, the development of organic molding materials that do not use petroleum, which is an underground resource that will be depleted some time in the future, is an issue facing humankind at large. Further, some forms of equipment made of plastic have problems of elution of formaldehyde or endocrine-disrupting chemicals which are harmful to the human body and the influences of such chemical substances on the human body have become social problems.

In response to the above problems, as described in Patent Document 1 mentioned above, the present inventors have already developed a molding material and a molded article obtained using only natural resources (biomass), such as lacquer and plant fibers, as raw materials without using any petroleum-derived chemical substances.

In view of the above problems, there is a demand for using a molding material made only from natural resources as the materials, etc., for forming an organic molding material, particularly for forming tableware (e.g., plates, various types of bowls, and *sake* cups).

However, the molded articles obtained by using a mold to compression-mold such molding material made from natural resources may have irregularities, which could result in a poor appearance. There is still room for improvement in using such molding material as organic molding materials, particularly for tableware.

Accordingly, an object of the present invention is to provide a method for manufacturing a molded article with further improved appearance even when using, for example, the above-described molding material made only from natural resources, such as lacquer and plant fibers.

### Means for Solving the Problem

In view of the above-described problems, the present inventors carried out intensive studies and, as a result, the present inventors have found that a molded article having a good appearance can be obtained by using a specific mold and adopting specific molding conditions, thereby completing the present invention.

Specifically, the present invention provides a method for manufacturing a molded article as defined in claim 1. The present invention also provides a method for manufacturing a molded article, according to any of the above, wherein the molding material is a powdered molding material including: a polymer of one or more monomers selected from the group consisting of urushiol, laccol and thitsiol; and plant fibers. The present invention also provides a method for manufacturing a molded article according to any of the above, wherein the molding material is a powdered molding material obtained by kneading, while heating, lacquer and plant fibers. The molded article is preferably tableware. The method for manufacturing a molded article of the present invention preferably further includes a step of applying lacquer to a surface of the molded article.

A molded article may be manufactured by any of the above-described molded article manufacturing methods. It is disclosed herein a mold comprising at least two sections , being an upper mold and a lower mold arranged to face the upper mold, the upper mold and the lower mold each having a degassing structure.

### Effect of the Invention

A molded article with a good appearance can be obtained even when using, for example, the above-described molding material made only from natural resources, such as lacquer and plant fibers.

### Brief Description of the Drawings

Fig. 1 is a cross-sectional view schematically showing an example of a mold used in the present embodiment.
Fig. 2 is a picture showing examples of the molded article according to the present embodiment.

### Mode for Carrying out the Invention

Hereinafter, an embodiment of the present invention (hereinafter referred to as the "present embodiment") will be specifically described by referring to the attached drawings as necessary. In the drawings, the same components are given the same reference numerals and any repetitive description will be omitted. Further, the positional relationship, such as top and bottom, left and right, etc., is as shown in the drawings, unless otherwise specified. The dimensional ratios in the drawings are not limited to those shown in the drawings. The present invention is not limited to the below embodiment and can be carried out with various modifications within the gist of the invention.

### <<Method for Manufacturing Molded Article>>

The method for manufacturing a molded article of the present embodiment includes a step of compression-molding a molding material with a mold to obtain a molded article. The mold has at least two sections, being an upper mold and a lower mold arranged to face the upper mold, the upper mold and the lower mold each having a degassing structure, and a pressing operation and a degassing operation are performed in the compression-molding.

### <Mold>

The mold used in the present embodiment is not particularly limited and examples thereof include molds for food containers (tableware) and molds for cases for mobile phones and personal computers, etc. Examples of molds for food containers include molds for *sake* cups, molds for bowls and molds for plates.

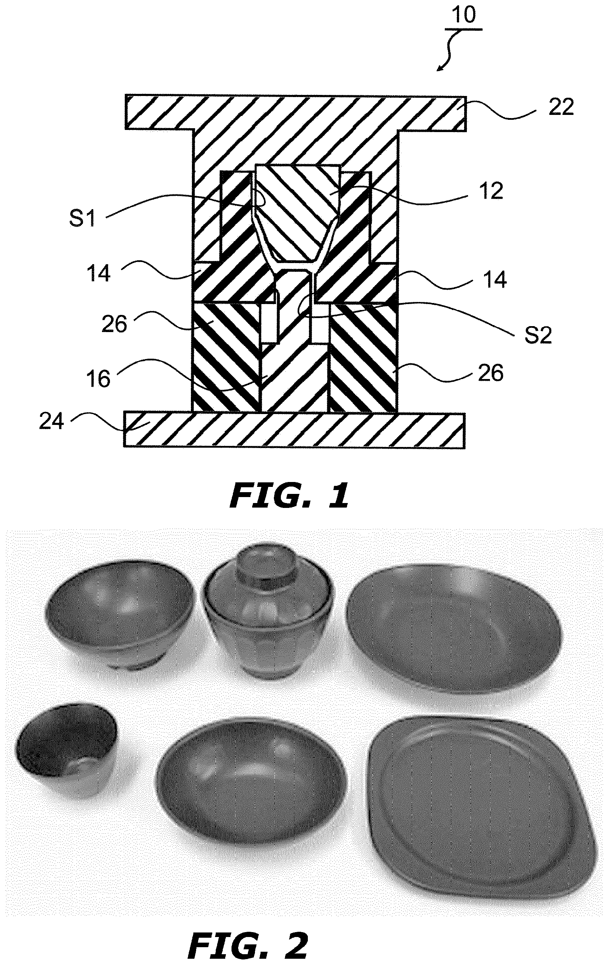

The mold used in the present embodiment has at least two portions, an upper mold and a lower mold arranged to face the upper mold, and the upper mold and the lower mold each have a degassing structure. The mold has at least three sections - an upper mold, a lower mold arranged to face the upper mold and an intermediate mold sandwiched between the upper mold and the lower mold - and the degassing structure is provided in at least two locations, one between the upper mold and the intermediate mold and one between the lower mold and the intermediate mold. Fig. 1 shows a schematic cross-sectional view of one example of such mold.

The mold 10 shown in Fig. 1 is a mold for manufacturing a *sake* cup and such mold has an upper mold 12, a lower mold 16 arranged to face the upper mold 12, and an intermediate mold 14 sandwiched between the upper mold 12 and the lower mold 16. The upper mold 12 is a section (mold member) for forming, together with the intermediate mold 14, the container portion (rim, upper body, lower body, shoulder (foot connecting portion) and bottom) of the *sake* cup and such upper mold 12 has a shape suitable to press, from inside, the container portion of the *sake* cup during molding. The intermediate mold 14 is a section (mold member) for forming, together with the upper mold 12, the container portion (rim, upper body, lower body, shoulder (foot connecting portion) and bottom) of the *sake* cup and also for forming, together with the lower mold 16, the bottom and foot of the *sake* cup, and such intermediate mold 14 has a shape suitable for receiving the container portion and the foot of the *sake* cup from outside during molding. The lower mold 16 is a member (mold member) for forming, together with the intermediate mold 14, the foot and the bottom of the *sake* cup and such lower mold 16 has a shape suitable for forming such portions.

The mold 10 has a space S1 between the upper mold 12 and the intermediate mold 14, other than the portion for forming the *sake* cup, and the space S1 preferably has a size that does not allow the molding material to enter the space. Gas that is generated by heating and pressing during molding can easily exit through the above space. The mold 10 also has a space S2 between the intermediate mold 14 and the lower mold 16, other than the portion for forming the *sake* cup, and the space S2 preferably has a size that does not allow the molding material to enter the space. Through this space as well, gas that is generated by heating and pressing during molding can easily exit. The mold 10 also has: an upper mold attaching plate 22 to which the upper mold 12 is attached and fixed and which is used to press the upper mold 12, the intermediate mold 14 and the lower mold 16 from above; a lower mold attaching plate 24 to which the lower mold 16 is attached and fixed and which is used to press the upper mold 12, the intermediate mold 14 and the lower mold 16 from below; and a spacer block 26 that supports the intermediate mold 14 to hold it at a predetermined height.

By using the mold 10 having the above structure, gas is less likely to remain in the mold 10, even when using, for example, a molding material obtained from lacquer and plant fibers as a raw material, and this results in suppressing the occurrence of molding sinks and obtaining a molded article having an even surface and a good appearance. Further, in the method for manufacturing a molded article of the present embodiment, molding is preferably performed such that some "burrs" occur. If there are some "burrs" present, this enables gas to exit far more favorably and moldability is likely to be further favorable.

### <Compression Molding Conditions>

In the method for manufacturing a molded article of the present embodiment, a pressing operation and a degassing operation are performed in the compression-molding. From the viewpoint of further ensuring that a molded article having a higher level of mechanical strength can be obtained, the pressing operation and degassing operation are repeatedly performed several times in an alternating fashion. Preferably, the pressure is gradually increased to a predetermined pressure over the several times of repeated operation. Here, several times means two or more times, and preferably three or more times.

In the several times of performing the pressing operation, it is preferable that the pressure is increased sequentially in each pressing operation from the first pressing operation through the last pressing operation. As a result, a molded article having a higher level of mechanical strength can be manufactured at a further enhanced yield.

For example, the pressure at the time of the last pressing operation is preferably in a range from 10 MPa to 70 MPa.

For example, the time of the last pressing operation is preferably 10-120 minutes.

For example, the temperature at the compression molding is preferably in a range from 100 °C to 180°C.

By setting the compression molding conditions as above, the occurrence of molding sinks can be suppressed and a molded article having an even surface and a good appearance can be obtained even by using, for example, a molding material obtained from lacquer and plant fibers as a raw material.

Here, the process of compression-molding a molding material with the mold 10 to obtain a *sake* cup as a molded article will be described. First, a suitable amount of molding material is provided into the intermediate mold 14 of the mold 10. Since the mold 10 is already heated at that time, providing is performed as quickly as possible. After that, under the above-described pressing/heating conditions, the upper mold 12 is pressed down to the intermediate mold 14 for pressing, and pressing and degassing operations are alternately repeated to carry out the pressing step. After the completion of the pressing/heating step, the lower mold 16 is pressed up to take out the resulting compression-molded article from the mold. If there are any burrs existing at the edge of the compression-molded article taken out from the mold, it is preferable to remove such burrs as appropriate.

### <Molding Material>

The molding material used in the present embodiment is not particularly limited, and examples thereof include a molding material obtained from lacquer and plant fibers, which will be explained later, below.

The molding material preferably includes a powder that passes through a 10-120 mesh sieve and more preferably includes a powder that passes through a 60-100 mesh sieve. Such molding material has a favorable particle size, so that excessive entry into a space of the mold can be more sufficiently suppressed. It is to be noted that the entry of a proper amount of molding material into a space will result in several burrs being formed, thereby resulting in appropriate degassing effects, and is thus favorable. Consequently, when molding the molding material having a particle size within the above range under the above-mentioned compression molding conditions, the occurrence of molding sinks can be further suppressed and a molded article having an even surface and a good appearance can be obtained.

The molding material is preferably a powdered molding material obtained by three-dimensionally kneading, while heating, lacquer and plant fibers. A molded article with further improved appearance can be obtained by using such molding material made only from natural resources. Molded articles having such good appearance can be suitably used for tableware.

The present inventors have already proposed, in Patent Document 1, kneading lacquer and plant fibers and thereby providing a molding material and a molded article using only natural resources as raw materials. In a kneaded mixture of lacquer and plant fibers, however, lacquer is usually likely to aggregate and form lumps due to its inherent viscosity without fully polymerizing with plant fibers. Thus, a step of pulverizing such lumps in the kneaded mixture is performed.

In contrast, since a three-dimensional kneading method, in which three-dimensional movements (which can also be called steric movements) are dominant in the movements of the mixture due to kneading, is adopted in the present embodiment, the resulting mixture of lacquer and plant fibers constitutes a powder having a particle size suitable for a molding material, and thus, no pulverizing step is required.

Specifically, the wording "(to) knead three-dimensionally" used in the present embodiment means not a kneading wherein two-dimensional, or planar, movements of the mixture are dominant, but a kneading wherein movements in multiple directions, including vertical, horizontal and oblique directions, (i.e., steric movements) are dominant. Examples of a mixing machine that enable such three-dimensional kneading include a fluid-type mixing machine (a Henschel mixer), a high-speed fluid-type mixer, and a Schugi mixer. By kneading a mixture of lacquer and plant fibers three-dimensionally, a molding material in a powdered form having a suitable particle size can be obtained without a pulverizing step. The major reason for this can be considered as follows: when the mixture is kneaded three-dimensionally, strong convection, dispersion and shearing/mixing effects are applied to the kneaded mixture, which breaks, binds, or rounds the kneaded mixture to form powder having a suitable particle size. However, the reason therefor is not limited to the above.

In the present embodiment, the particle size of the powder is more favorable (suitable) if a larger percentage of the powder has almost the same diameter, and the particle size distribution is more favorable (suitable) if it is narrower. This is based on the viewpoint of allowing, when filling a mold with a powdered molding material in order to mold such material, a small amount of such molding material to enter a space of the mold (e.g., a space formed between respective mold members if the mold has such several mold members) which should not be filled with the molding material, so as to cause several burrs to be formed, thereby enhancing moldability. For example, the molding material used in the present embodiment preferably includes a powder that passes through a 10-120 mesh sieve and more preferably includes a powder that passes through a 60-100 mesh sieve. The molding material including a powder that passes through a 10-120 mesh sieve shows favorable moldability, in other words, it is possible to allow a small amount of the molding material to enter a space of the mold and for burrs to thereby be formed appropriately. Thus, such molding material is suitable as a material for forming a compression-molded article, which will be described later. It should be noted that burrs formed as above can be removed after the molded article is taken out from the mold.

The molding material is preferably a powdered molding material including: a polymer of one or more monomers selected from the group consisting of urushiol, laccol and thitsiol; and plant fibers. A molded article with further improved appearance can be obtained by using such molding material made only from natural resources. Molded articles having such good appearance can suitably be used for tableware. The molding material made only from natural resources can be obtained, for example, by three-dimensionally kneading, while heating, lacquer and plant fibers.

Examples of the plant fibers used in the present embodiment include wood fiber, such as cellulose of ordinary tree species, including *sugi* (Japanese cedar), *hinoki* (Japanese cypress), *tsuga* (Japanese hemlock), empress, pine and spruce trees. Other than wooden base materials, materials containing bamboo, reed, cotton and other plant-based fibers may also be used. The suitable particle size of the plant fiber powder is 10-120 mesh. If plant fibers are broken into pieces by, for example, a mill, the fibers are fibrillated and lacquer can easily penetrate into such fibrillated fibers during kneading so that a homogenous mixture of lacquer and plant fibers can be obtained. The above plant fibers may be used singly or in combination of two or more types.

Examples of the lacquer used in the present embodiment include lacquer containing one or more monomers selected from the group consisting of urushiol, laccol and thitsiol, and/or a polymer thereof.

In the manufacturing method including the step of three-dimensionally kneading, while heating, lacquer and plant fibers in a mixing machine, lacquer and plant fibers are preferably mixed at a weight ratio of 1:9 to 6:4, and more preferably 4:6 to 6:4. If the mixing ratio between the lacquer and plant fibers is within the above range, a powdered molding material having a suitable particle size is likely to be obtained and a molded article obtained by compression-molding such molding material is likely to have excellent flexural strength.

When three-dimensionally kneading, while heating, lacquer and plant fibers, lacquer and plant fibers may be provided into a mixing machine before the three-dimensional kneading. Lacquer and plant fibers may be provided into the mixing machine at the same time, or separately. Preferably, plant fibers are provided into the mixing machine first and lacquer is provided next. By first providing plant fibers into the mixing machine, a powdered molding material having a suitable particle size is likely to be obtained.

When providing plant fibers first into the mixing machine, it is preferable to preliminarily knead the plant fibers three-dimensionally while heating them.

By providing plant fibers first, and lacquer next, into the mixing machine and manufacturing a molding material under the above-described conditions, a powdered molding material having a more suitable particle size and excellent moldability is likely to be obtained and a molded article obtained by compression-molding such molding material is likely to have excellent flexural strength and a good appearance.

According to the above-described manufacturing method including the step of three-dimensionally kneading, while heating, lacquer and plant fibers in a mixing machine, a powdered molding material having a favorable particle size can be obtained, even by using only natural resources, such as lacquer and plant fibers, as raw materials. Further, by using such molding material, a molded article having improved appearance can be obtained.

The manufacturing apparatus used for the above-described manufacturing method including the step of three-dimensionally kneading, while heating, lacquer and plant fibers in a mixing machine, preferably includes: a mixing machine comprising a vessel for receiving lacquer and plant fibers therein and a rotating blade provided in the vessel; a power meter that measures power supplied to drive the rotating blade; and a controller that controls the rotation speed of the rotating blade based on the value of the power. With the above manufacturing apparatus, a powdered molding material having a suitable particle size and excellent moldability can be obtained stably and efficiently, as has already been described above. The controller calculates a suitable rotation speed of the rotating blade based on the obtained power value and controls the rotation speed manually or automatically, according to such calculation. In the above manufacturing apparatus, the mixing machine is not particularly limited, as long as it has a vessel and rotating blade as described above, and it may be a known type. Further, the power meter is not particularly limited, as long as the power meter and the mixing machine are connected to each other so that power supplied to drive the rotating blade can be measured, and it may be a known type. Still further, the controller is not particularly limited, as long as it can control the rotation speed of the rotating blade, and it may be a known type.

### «Molded Article»

The molded article of the present embodiment is manufactured by the above-described method for manufacturing a molded article. Examples of such molded article include tableware and cases for mobile phones and personal computers.

For example, when using, as a raw material, a molding material made from lacquer and wood fibers, the molded article of the present embodiment has a wood material feeling and a good appearance, and can be used as is for, by way of example, equipment and various types of tableware. For applications that particularly need beautiful appearance and improved water resistance, it is preferable to further apply a lacquer coating on the surface thereof. In that case, if the above-described molding material made from lacquer and plant fibers is used as a raw material of the molded article, a lacquer coating will fit quite well to the compound material and this means that various base processes in the conventional coating processing can be omitted.

Furthermore, if final heating treatment is carried out for the molded article obtained as set forth above, the lacquer coating film is completely cured so as to improve contact with the base. Further, the active groups in, for example, urushiol, laccol or thitsiol disappear so that it appears that there is almost no risk of lacquer rash for the user. The obtained molded article is sufficient for practical use, such as for tableware. Fig. 2 shows tableware of plates and various types of bowls, as examples of this.

### Examples

Hereinafter, the present invention will be specifically described according to Examples; however, the present invention is not limited by these Examples. The following components were used in the Examples and Comparative Examples.

### 1) Lacquer

Lacquer type: Chinese raw lacquer
Lacquer composition: 75.6% by mass of urushiol, 13.5% by mass of water, 9.0% by mass of nitrogen-containing matter and 1.9% by mass of gum
The lacquer composition was determined in accordance with the method of analyzing lacquer liquid compositions (prepared by the Coating Engineering Subcommittee of the Joint Committee on Material and Chemical Engineering).

### 2) Plant Fibers

Plant fiber type: *Sugi* (Japanese cedar) wood powder (100% made from forest thinnings produced by Tonami Forestry Cooperative in Toyama Prefecture, product passing 100 mesh size)
(i) Particle size: more than 330 mesh - 19.7% by mass, 330-200 mesh - 22.6% by mass, 200-150 mesh - 25.4% by mass, 150-100 mesh - 25.9% by mass, 100-80 mesh - 5.6% by mass, and less than 80 mesh - 0.8% by mass
(ii) Water content: 7.0% by mass
(iii) Bulk specific gravity: 1000 cm³/180g

The values shown in (i) to (iii) above are based on data from Tonami Forestry Cooperative.

### (Measurement Methods for Various Properties)

### <Acetone-soluble Matter>

The acetone-soluble matter (% by mass) in the molding material was measured in the following manner.

1 g of molding material was placed in a glass container with 25 ml of acetone therein and left overnight. After that, filtration was performed and the remaining substance was further mixed with 25 ml of acetone and left for two hours. Filtration was performed thereafter. The substance dissolved in the acetone after the two filtrations was left as is for five days in order to remove volatile components. After removing the volatile components, the weight of the substance dissolved in the acetone was measured and the acetone-soluble matter (% by mass) in the molding material was calculated from the above measured value and the initial weight (1 g) of the molding material.

### <Particle Size Distribution>

The molding material was sorted using a vibrating sieving machine (Sato's method vibrating sieving machine CB40-3SH, manufactured by Koei Sangyo Co., Ltd.) to measure a particle size distribution.

### <Flexural Strength and Flexural Modulus >

A sample piece (having a width of 10±1 mm, a thickness of 4.0±0.2 mm and a length of 80 mm or more) was prepared using the compression-molded article and its flexural strength (MPa) and flexural modulus (GPa) were determined in accordance with the plastic flexural property testing method of JIS K7171-1994. The test was performed three times and the average value found in the three tests was regarded as the flexural strength (MPa) and flexural modulus (GPa) of the compression-molded article. In the above test, the distance between the supports was 70 mm and the cross-head speed was 5 mm/min. Autograph AG-10TD, manufactured by Shimadzu Corporation, was used for the measurement apparatus.

### [Example 1]

### (Manufacture of Molding Material)

Using a fluid-type mixing apparatus (Mitsui FM20C/I, manufactured by Mitsui Mining Co., Ltd.), a molding material was manufactured as follows. The mixing apparatus included: a mixing machine having a vessel (a mixing tank having a volume of 20 L) for receiving lacquer and plant fibers therein and two rotating blades provided within the vessel to have the same rotation axis (type of blades: CK for upper blade and AO for lower blade; size of rotating blades: Ø 27 cm (upper side) and Ø 26 cm (lower side)); a power meter (clamp power meter) for measuring the power supplied to drive the rotating blades; and a controller for controlling the rotation speed of the rotating blades based on the power value.

The vessel within the mixing machine was heated and when the temperature inside the vessel reached 50°C, 1 kg of plant fibers was provided into the vessel and the lid of the vessel was closed. The rotating blades provided within the vessel were rotated at a speed of 200 rpm to preliminarily knead the plant fibers in a three-dimensional manner. When the temperature inside the vessel reached 65°C, 1 kg of lacquer held at room temperature (25°C) was gradually provided into the vessel for 2-15 minutes. Then, when the temperature inside the vessel reached 100°C, the rotation speed of the rotating blades was increased to 600 rpm and the lacquer and the plant fibers were kneaded in a three-dimensional manner within the mixing machine while being heated at 130°C.

During the kneading, the power supplied to drive the rotating blades was measured and the measured power value was recorded. After the point in time when the mixture of the lacquer and the plant fibers was determined as having formed into a powder and become an appropriate molding material based on changes with time of the recorded power value, kneading continued to be performed for some time. Then, the rotation of the rotating blades and the heating inside the mixing machine were stopped, thereby stopping the kneading of the lacquer and plant fibers. The kneading time of the lacquer and plant fibers was 54 minutes 20 seconds. The obtained molding material was taken out from a discharge port of the mixing machine and cooled immediately.

The acetone-soluble matter in the obtained molding material was measured and found to be 12.26% by mass. Further, the obtained molding material was a powder including a polymer of urushiol (confirmed by a decrease in the amount of acetone-soluble matter) and plant fibers. The specific particle size distribution of the molding material was as follows: 87.2% by mass had a particle size exceeding 60 mesh.

### (Manufacture of Molded Article)

A molded article (a *sake* cup) was manufactured by compression-molding the above-obtained molding material using a mold, as follows.

The mold used was a mold for a *sake* cup. The sake cup mold used has a schematic cross-section as shown in Fig. 1.

The above mold was attached to a compression molding machine and the surface temperature of the mold was set to 145°C. Powder exceeding 60 mesh, from among the above-obtained molding material, was introduced into the mold. Then, a pressing operation and a degassing operation were alternately repeated so that molding was performed with a maximum pressure of 12.75 MPa. After that, the mold was degassed and the resulting molded article (the *sake* cup) was taken out from the mold. The obtained molded article (the *sake* cup) did not have imperfect polymerization, and had an even surface and a good appearance.

Although not shown in the drawings, when using, for example, a planar molding mold for the molding of a plate, etc., good moldability can be obtained if the maximum pressure is set at about 62.3 MPa.

### [Comparative Example 1]

A molded article (a *sake* cup) was manufactured in the same way as in Example 1 except for using a mold having no degassing structure between the lower mold and intermediate mold (the other structures were the same as in the mold used in Example 1). The appearance of the obtained molded article (the *sake* cup) was poor due to imperfect polymerization.

### [Comparative Example 2]

A molded article (a *sake* cup) was manufactured in the same way as in Example 1 except that no degassing operation was performed in the compression molding. The obtained molded article (the *sake* cup) had a poor appearance, with brown or white discoloration and a cracked bottom.

### Industrial Applicability

A molded article obtained according to the method for manufacturing a molded article of the present invention has further improved appearance and can suitably be used for various types of tableware.

### Description of Reference Numerals

- 10: Mold
- 12: Upper mold
- 14: Intermediate mold
- 16: Lower mold
- 22: Upper mold attaching plate
- 24: Lower mold attaching plate
- 26: Movable spacer block
- S1, S2: Space

## Claims

1. A method for manufacturing a molded article, comprising a step of compression-molding a molding material with a mold (10) to obtain a molded article,
wherein the mold comprises at least three sections, two of which being an upper mold (12) and a lower mold (16) arranged to face the upper mold (12),
wherein a pressing operation and a degassing operation are performed in the compression-molding;
wherein the mold comprises a third section being an intermediate mold (14) sandwiched between the upper mold (12) and the lower mold (16), and has a degassing structure provided in at least two locations, one between the upper mold (12) and the intermediate mold (14) and one between the lower mold (16) and the intermediate mold (14); **characterized in that**
the pressing and degassing operations are alternately repeated to carry out a pressing step.

2. The method for manufacturing a molded article according to claim 1, wherein the molding material is a powdered molding material comprising: a polymer of one or more monomers selected from the group consisting of urushiol, laccol and thitsiol; and plant fibers.

3. The method for manufacturing a molded article according to claim 1 or 2, wherein the molding material is a powdered molding material obtained by kneading, while heating, lacquer and plant fibers.

4. The method for manufacturing a molded article according to any one of claims 1 to 3, wherein the molded article is tableware.

5. The method for manufacturing a molded article according to any one of claims 1 to 4, further comprising a step of applying lacquer to a surface of the molded article.

6. The method for manufacturing a molded article according to any one of claims 1 to 5 wherein the upper mold is pressed down to the intermediate mold, wherein after the pressing step, the lower mold is pressed up to take out the resulting compression-molded article.

## Patentansprüche

1. Verfahren zur Herstellung eines Formartikels, umfassend einen Schritt des Formpressens eines Formmaterials mit einer Form (10), um einen Formartikel zu erhalten,
wobei die Form mindestens drei Abschnitte umfasst, zwei derer eine obere Form (12) und eine untere Form (16), die der oberen Form (12) zugewandt angeordnet ist, sind,
wobei eine Pressarbeit und eine Entgasungsarbeit bei dem Formpressen ausgeführt werden;
wobei die Form einen dritten Abschnitt umfasst, der eine Zwischenform (14) ist, die zwischen die obere Form (12) und die untere Form (16) eingeschoben ist, und eine Entgasungsstruktur aufweist, die an mindestens zwei Stellen, einer zwischen der oberen Form (12) und der Zwischenform (14) und einer zwischen der unteren Form (16) und der Zwischenform (14), bereitgestellt ist;
**dadurch gekennzeichnet, dass**
die Press- und Entgasungsarbeiten abwechselnd wiederholt werden, um einen Pressschritt auszuführen.

2. Verfahren zur Herstellung eines Formartikels nach Anspruch 1, wobei das Formmaterial ein pulverförmiges Formmaterial ist, umfassend: ein Polymer von einem oder mehreren Monomeren ausgewählt aus der Gruppe bestehend aus Urushiol, Laccol und Thitsiol; und Pflanzenfasern.

3. Verfahren zur Herstellung eines Formartikels nach Anspruch 1 oder 2, wobei das Formmaterial ein pulverförmiges Formmaterial ist, das durch Kneten, unter Erwärmen, von Lack und Pflanzenfasern erhalten wird.

4. Verfahren zur Herstellung eines Formartikels nach einem der Ansprüche 1 bis 3, wobei der Formartikel Tafelgeschirr ist.

5. Verfahren zur Herstellung eines Formartikels nach einem der Ansprüche 1 bis 4, ferner einen Schritt des Auftragens von Lack auf eine Oberfläche des Formartikels umfassend.

6. Verfahren zur Herstellung eines Formartikels nach einem der Ansprüche 1 bis 5, wobei die obere Form zur Zwischenform heruntergedrückt wird,
wobei, nach dem Pressschritt, die untere Form aufwärts gedrückt wird, um den resultierenden formgepressten Artikel herauszunehmen.

## Revendications

1. Procédé de fabrication d'un article moulé, comprenant une étape de moulage par compression d'un matériau de moulage avec un moule (10) pour obtenir un article moulé,
le moule comprenant au moins trois sections, dont deux sont un moule supérieur (12) et un moule inférieur (16), disposé pour faire face au moule supérieur (12),
une opération de compression et une opération de dégazage étant effectuées dans le moulage par compression;
le moule comprenant une troisième section, qui est un moule intermédiaire (14) pris en sandwich entre le moule supérieur (12) et le moule inférieur (16), et présentant une structure de dégazage disposée en au moins deux emplacements, un entre le moule supérieur (12) et le moule intermédiaire (14) et un entre le moule inférieur (16) et le moule intermédiaire (14);
**caractérisé en ce que**
les opérations de compression et de dégazage sont alternativement répétées pour réaliser une étape de compression.

2. Procédé de fabrication d'un article moulé selon la revendication 1, le matériau de moulage étant un matériau de moulage en poudre comprenant: un polymère d'un ou plusieurs monomères sélectionnés dans le groupe constitué de l'urushiol, du laccol et du thitsiol; et de fibres végétales.

3. Procédé de fabrication d'un article moulé selon la revendication 1 ou 2, le matériau de moulage étant un matériau de moulage en poudre obtenu par malaxage de laque et de fibres végétales tout en les chauffant.

4. Procédé de fabrication d'un article moulé selon l'une quelconque des revendications 1 à 3, l'article moulé étant un article de vaisselle.

5. Procédé de fabrication d'un article moulé selon l'une quelconque des revendications 1 à 4, comprenant en outre une étape d'application de laque à une surface de l'article moulé.

6. Procédé de fabrication d'un article moulé selon l'une quelconque des revendications 1 à 5, le moule supérieur étant comprimé vers le bas jusqu'au moule intermédiaire,
après l'étape de compression, le moule inférieur étant comprimé vers le haut pour sortir l'article résultant moulé par compression.
